# EUROPEAN PATENT APPLICATION

(11) **EP 4 047 203 A1**
(43) Date of publication of application: **24.08.2022**
(21) Application number: 21158063.4
(22) Date of filing: 19.02.2021
(51) Int. Cl.: F03D 13/20, E04H 12/08, F03D 80/00

(54) **PLUG FOR FLANGE HOLES**

(71) Applicant: Siemens Gamesa Renewable Energy A/S, 7330 Brande (DK)
(72) Inventor: The designation of the inventor has not yet been filed
(74) Representative: Aspacher, Karl-Georg

(57) **Abstract**

A plug (1) configured to protect a hole (10) of a flange (21), said plug (1) comprising an annular portion (2) for sealing the opening of the hole (10) and a fastening portion (3) protruding from the annular portion (2), characterized in that the fastening portion (3) is configured to be inserted by a fastening device (20) for fastening the plug (1) to the hole (10), wherein the plug (1) has a hollow space inside its body and has a plug opening (4) for allowing the insertion of the fastening device (20).

## Description

The present invention relates to a plug configured to protect a hole of a flange. The present invention further relates to a flange of a tower of a wind turbine comprising a plug.

Wind turbines are increasingly used for the generation of electrical energy. A wind turbine typically comprises a tower and a nacelle mounted on the tower, to which a hub is attached. A rotor is mounted at the hub and coupled to a generator. A plurality of blades extends from the rotor. The blades are oriented in such a way that wind passing over the blades turns the rotor and rotates the shaft, thereby driving the generator to generate electricity.

The tower of a wind turbine typically comprises multiple tower sections to facilitate the transport of the tower from the production site to the installation site. These sections are usually coupled together by flanges fastened with fasteners. The strength of a flange connection depends on various parameters, for example on the choice of the steel, the wall thicknesses, the bolt diameters, the number of bolts in the bolt circle, the load-path etc. Flanges with a T-shape, so called T-flanges, have proven to be resistant to higher loads as other flanges, such as L-flanges, i.e. flanges with an L-shape. The use of T-flanges and L-flanges to connect tower sections of a wind turbine is known from US 2013/0180199 A1.

Thus, to increase the strength of a flange connection between tower sections, one approach may be to use a T-flange, which has the shape of an inverted "T" with an inner flange extending into the tower interior and an outer flange extending outward from the tower. A T-flange may have around twice the strength of an L-flange, i.e. it can withstand loads around twice as great as the loads that could be withstood by a comparable L-flange. However, a major disadvantage of the T-flange is that it requires access from the outside of the tower as well as access from the tower interior. Although T-flanges account of a greater load-bearing capacity than L-flanges, the assembly and lifetime servicing of wind turbines with towers using T-flanges result in a significant extra cost. The downside of a T-flange is however that it has bolts on the outside of the tower shell, thus it is highly exposed to the corrosive environment of offshore wind farms. The accessing of the T-flanges for maintenance purposes is also difficult.

Additionally, current developments of wind turbines tend to higher towers, as well as towers with smaller diameters and longer rotor blades, which result in loads in the tower higher than the ones which can be supported by L-flanges. Due to the increasing height and weight of the new-generation wind turbines, the L-flanges might not be suited to support the load of some new-generation wind turbines. The use of T-flanges is also not optimal due to the drawbacks of this type of flanges.

A further flange type being able to support higher loads than L-flanges are X-flanges. Hence, X-flanges are suited to support the load of new-generation wind turbines. A first concept of an X-flange connection is described in NL 1004960 C1. The idea of an X-flange is to have inclined studs which cross at a point aligned with the mid-plane of the circumference of the tower shell. This feature gives the flange extreme strength while maintaining accessibility to the studs on the inside of the tower.

XL-flanges are also flanges being able to support the load of new-generation wind turbines, their shape resulting from a combination of X-flanges and L-flanges, i.e. a flange with an L-circle of apertures at its inner radius and a region of X-shaped apertures. Thus, the XL-flange is a special variant of the X-flange, where the L-part is used between other purposes as an interface for attachment of equipment. An XL-flange is easier to handle and to transport than an X-flange due to the L-part of the flange.

X-flanges or XL-flanges comprise a first coupling part and a second coupling part, wherein the first coupling part and the second coupling part are coupled together by means of a fastener inserted in a hole extending through the first and the second coupling part.

The coupling parts of the X-flanges or XL-flanges comprise both blind holes, which terminate in the body of the coupling part, and through-holes, which extend all the way through the body of the coupling part.

Blind holes can have an internal thread to receive a threaded fastener, such as a metal screw for fastening the first coupling part to the second coupling part. The blind hole can have the internal thread at the end of the hole. This is advantageous, as the fastener is first inserted and centered through the unthreaded part of the blind hole and subsequently fastened through screwing the fastener to the blind hole, thus decreasing the possibility of damaging the opening of the hole or of the thread.

The fastening of the first coupling part and the second coupling part with the fastener is done by inserting the fastener through both a through-hole of one coupling part and a through-hole or a blind hole of the other coupling part. If the fastener is introduced through a through-hole of the first coupling part and a blind hole of the second coupling part, the blind hole of the second coupling part usually has an inner thread which enables to fasten the fastener and couple the first and second coupling parts together. A nut can then be used at the opening of the resulting blind hole to fasten both coupling parts together. Alternatively, if the fastener is introduced through two through-holes, one from the first coupling part and one from the second coupling part, then the fastener can be attached either by an inner thread of the through-holes and/or by a nut at both openings of the resulting through-hole.

Open blind holes are more critical than through-holes as water, salt, dust and/or dirt collected inside cannot flow out of the hole, which results in a faster deterioration of the materials. During transport, rain can accumulate inside the blind holes. Additionally, dirt can accumulate inside the through-holes if they are left unprotected. Even during storage, a high humidity of the storage facility or environments with a high salt content in the air, such as storage installations for offshore wind turbines in harbors will accelerate the corrosion of the holes.

The deterioration of the holes due to environmental conditions results in a premature wear of the coupling assembly. Water, salt, dust, and dirt collection in the holes can lead to corroded threads, which impede the studs or other fasteners from being inserted in the holes and correctly fastened during installation of the wind turbine. Additionally, corrosion can lead to cracking and failure of threads in holes, especially in blind holes. Thus, dirty holes retard the installation and result in a faster deterioration of the materials due to an increased wear.

The use of plugs to seal holes is known. For example, the use of plugs to close holes which are not utilized in the chassis or body of vehicles is known from the documents WO 2018 111 505 A1, EP 3 061 675 A1, DE 10 303 366 A1, and EP 0 911 132 A2. This is done to avoid resonances inside the hole, which can lead to vibrations, or the introduction of water and dirt. However, these plugs only seal the opening of the hole and they are not suited for flanges which will be stored in a storage facility for an extended amount of time, as degradation of the plug materials over time will decrease the sealing performance of the plug, resulting in air and moisture coming inside the hole. As these plugs only cover the opening of the hole, the inside of the hole is left unprotected if the sealing capability is not given anymore.

Additionally, if the plugs deteriorate over time, they might fall off the hole, which leaves the holes unprotected, or inside the hole, which can result in a melting of the plug with the inner threads of the hole, damaging the threads and impeding or hindering the introduction of the fasteners during the installation of the flanges at the installation site. Hence, standard plastic caps and plugs for temporary protection of holes are not suited for long term storage.

The use of plugs to protect the holes of an X-flange or an XL-flange is not known. Additionally, plugs which protect the holes during storage of the flanges for an extended amount of time are also not known. A robust sealing solution is required to protect the holes for long term storage.

Replacement of wind turbine parts can be very costly. For the case of X-flanges or XL-flanges, the forging of these shapes compared to other flanges requires more steel and therefore more raw material cost. Additionally, the costs of disassembling and replacing the damaged flange and the losses due to non-operation of the wind turbine during the replacement are high. Measures need to be taken to prevent the damage of the flanges.

It is therefore an object of the invention to protect the holes of X-flanges and XL-flanges particularly during storage of these flanges that overcome the problems described above.

This is achieved by a plug according to claim 1 and a flange of a tower of a wind turbine comprising such a plug according to claim 15.

A plug configured to protect a hole of a flange according to the invention comprises an annular portion for sealing the opening of the hole and a fastening portion protruding from the annular portion. The fastening portion is configured to be inserted by a fastening device for fastening the plug to the hole. For allowing the insertion of the fastening device, the plug has a hollow space inside its body and has a plug opening.

The plug prevents water or dust ingress and collection inside the hole of the flange during transport or storage of the parts. To achieve this, the annular portion seals the plug opening. The fastening portion increases the robustness by increasing the length of the plug, as the fastening portion protrudes from the annular portion. Additionally, the fastening portion allows for a fastening of the plug in the hole by allowing the insertion of the fastening device in the plug, thus preventing the plug from releasing from the hole and falling, which might happen during handling operations of the flanges but also during long time storage when plugs are not fastened to the hole. To fasten the plug to the hole, the fastening device is inserted through the plug opening in a hollow space of the plug and presses the plug against the hole.

Covering the holes of flanges is a cost-effective solution to prevent water and dirt to enter into the holes before a fastener, which fastens flanges together, is inserted in the holes during the installation of the tower at the installation site. The plug should be robust enough to stay intact during transportation and storage.

Thus, the main benefit of using a plug is to protect the flanges from corrosion, which ensures the structural integrity of the tower. If not protected, the holes can corrode, leading to service repairs which may be costlier than providing the plugs at the first place.

This problem affects X-flanges and XL-flanges of tower sections, but the problem is not limited to this type of flanges. In fact, any structural component comprising holes might be affected by water, salt, dust, and/or dirt collected inside the hole. Hence, the plug can be inserted in any hole affected by the problem. Particularly, the plug can be inserted in any hole of a structural element which is stored over a long period.

According to a preferred embodiment of the invention, the hole is a blind hole, which terminates in the body of the flange. Blind holes are more critical than through-holes as water, salt, dust and/or dirt collected inside cannot flow out of the hole, which results in a faster deterioration of the materials. Therefore, it is advantageous to cover blind holes with the plug.

According to a preferred embodiment of the invention, the hole comprises a first part and a second part.

According to another preferred embodiment, the second part has a smaller diameter than the first part of the hole. Additionally, the plug comprises a planar annular surface extending in radial direction between the annular portion and the fastening portion configured to abut an inner surface of the hole between the first part and the second part of the hole. Through this radially extending planar annular surface, the plug can sit at the inner surface of the hole, i.e. at the transition surface between the first part and the second part of the hole. This ensures that the plug is fastened in a specific place inside the hole, as the inner surface between the first part and the second part acts as a stopper, limiting the insertion of the plug. Hence, the plug is inserted and fastened at the same location for all the holes. This feature avoids fastening the plug too deep in the hole, thus complicating the detachment of the plug when the plug is no longer needed.

According to another preferred embodiment of the invention, the fastening portion has a smaller width than the annular portion. This is advantageous for holes having a first part with a larger diameter than a second part. The plug is then adapted to the shape of the hole for an efficient sealing and fastening.

According to a preferred embodiment of the invention, a threaded part covers at least partially the second part of the hole. Holes can have an internal thread to receive a threaded fastener during the installation of the flange at the installation site, such as a metal screw. The hole can have the threaded part, i.e. the internal thread, at the end of the hole. This is advantageous during installation, as the fastener is first inserted and centered through the first part of the hole and subsequently fastened through screwing the fastener to the threaded part of the second part of the hole, thus decreasing the possibility of damaging the hole opening or the thread.

According to another preferred embodiment of the invention, the surface of the fastening portion grips with the threaded part of the hole, preventing the plug from detaching and protecting the threads. For this, the fastening portion engages with the internal threads of the second part of the hole, fixing the plug into place and preventing it from coming loose prematurely. The threads might also cut into the fastening portion of the plug, which enhances the fastening of the plug with the hole, as due to the cuts it is more difficult for the plug to shift in axial direction. Hence, if axial forces, for example during transport or handling at the storage facility, act on the plug, it will stay in place and will not fall from the hole. An efficient fastening ensures a long-term protection against water and dirt ingress.

According to another preferred embodiment of the invention, a threaded portion covers at least partially the fastening portion of the plug. The threaded portion of the plug can engage with the threaded part of the hole, preventing the plug from detaching and protecting the threads. This allows to fasten the plug in the hole and prevents the plug from coming loose prematurely. An advantage of having a plug with a threaded portion at the fastening portion is that the plug can be reused for other holes, as the threads of the hole do not need to cut into the fastening portion to engage and fasten the plug with the hole. So the plugs are not damaged during the fastening of the plug with the hole.

For the fastening portion of the plug to engage with the threaded part of the hole, once the plug is inserted in the hole, the fastening device turns the plug. The plug will then remain in place until the fastening device is used to turn the plug in the other direction and remove the plug from the flange. This will typically be done at pre-assembly where the plugs will be replaced with a temporary solution which is quicker to work with at the installation site.

According to another preferred embodiment of the invention, the length of the annular portion is about the length of the first part of the hole. Increasing the length of the annular portion to match the length of the first part of the hole makes the plug more robust and increases the sealing surface of the plug, preventing water or dirt from entering the hole.

According to another preferred embodiment of the invention, the length of the fastening portion is about the length of the second part of the hole. Increasing the length of the fastening portion to match the length of the second part of the hole makes the plug more robust and improves the fastening of the plug to the second part of the hole, especially if the second part of the hole has a threaded part. In this case, more surface area of the second part of the hole is protected by a larger fastening portion of the plug.

According to another preferred embodiment of the invention, the annular portion of the plug has a cylinder shape. Hence, the width of the annular portion is constant. This is advantageous, as the whole surface of the annular portion in contact with the sealing surface, which is the surface of the annular portion pressing against the inner surface of the hole, is large enough to avoid water or dirt from entering the part of the hole sealed by the plug during the time when the plug is used for sealing the hole.

According to another preferred embodiment of the invention, the annular portion of the plug has a conical shape. Hence, the width of the annular portion decreases gradually from the plug opening to the end of the annular portion at the transition between the annular portion and the fastening portion. A clear advantage of this embodiment is that the plug can be removed more easily from the hole.

According to another preferred embodiment of the invention, the width of at least a part of the annular portion is larger than the diameter of the first part of the hole before inserting the plug in the hole, wherein the insertion of the plug and the sealing of the hole is achieved through compression of the annular portion. This results in an interference fit or a press fit between the inner surface of the hole and the annular portion of the plug. Usually, the region of the annular plug close to the plug opening will have the interference fit, as it is the region closer to the opening of the hole. The closer the sealing to the opening of the hole, the larger the inner surface of the hole protected against water and dirt.

According to another preferred embodiment of the invention, the width of at least a part of the annular portion can be tapered, in order to become gradually narrower from the plug opening in direction of the fastening portion. In this case, the end of the annular portion at the plug opening, having the largest width compared to the end of the annular portion at the transition between the annular portion and the fastening portion, provides for the sealing of the hole opening. A benefit of this alternative embodiment is that less material is needed for the plug and less force has to be applied by the fastening device to introduce the plug in the hole and to fasten the plug, as only the region of the annular portion with the width larger than the diameter of the first part of the hole has to be compressed for inserting the plug, the rest of the tapered region of the annular portion is not compressed to fit inside the hole. A tapered width is also robust due to the gradual decrease of the width of the plug.

According to another preferred embodiment of the invention, the surface of the annular portion in contact with the inner surface of the hole is substantially flat. This has the advantage that the sealing surface, which is the surface of the annular portion pressing against the inner surface of the hole, is large enough to avoid water or dirt from entering the part of the hole sealed by the plug during the time when the plug is used for sealing the hole. Even if the material of the plug deteriorates over time, this surface is large enough to account for the deterioration or imperfections in the plug to ensure an efficient sealing.

According to another preferred embodiment of the invention, the surface of the annular portion has a profile with a periodically repeated pattern. The periodically repeated pattern forms the shape of the sealing surface of the annular portion, which seals the hole. Such a pattern consists of a certain geometrical shape that is repeated in axial direction of the plug.

A geometrical shape can be designed to have peaks in contact with the inner surface of the hole and inner regions to store possible leakages and avoid the leakage to travel further inside the hole. For example, possible leakages of water or dirt inside the hole can be stored at the valley between peaks of the profile of the annular portion, thus avoiding the leakage to arrive at the threaded part of the hole and avoiding a thread damage.

A geometrical shape with peaks has the further advantage that only the peaks are in contact with the inner surface of the hole, resulting in less resistance of the plug against the inner surface of the hole compared to a substantially flat surface of the annular portion. A lower resistance of the plug against the inner surface of the hole makes the insertion of the plug in the hole easier, as well as the detachment of the plug prior to installation. Additionally, if the plug is made from a flexible material such as PE or rubber, the flexibility of the peaks allows the peaks to bend or tilt during the insertion of the plug in the hole, decreasing the resistance of the annular portion against the inner surface of the hole and simplifying the insertion of the plug in the hole.

Hence, the periodic repetition of the geometrical shape along the entire extent of the annular portion ensures the sealing functionality of the plug. Additionally, the resistance of the plug against the inner surface of the hole is lower than the one of an annular portion with a substantially flat surface.

Preferably, the periodically repeated pattern is a saw-tooth profile or a pattern consisting of spaced triangles of arbitrary shape or a sinusoidal profile or a superposition thereof.

A saw-tooth profile is a periodic sequence of right-angled triangles. A pattern consisting of spaced triangles of arbitrary shape includes preferably right-angled triangles or isosceles triangles. The size of the triangles, or the length of their edges, respectively, as well as the number of triangles on a seal part and/or the distance of their spacing, can be chosen in dependence of the size of the plug, the size of the annular portion and/or the size of the hole.

A sinusoidal profile is a profile with the shape of a wave having a regular smooth repeating pattern. Alternatively, U-shaped projections can be used, which have a similar shape to a sinusoidal profile but with a flat valley.

According to another preferred embodiment of the invention, the surface of the annular portion has grooves or channels configured to collect a leakage. This is a safety measure for the case that water or dirt passes through the sealing surface between the annular portion and the inner surface of the hole. In this case, water or dirt will be collected in the grooves and thus avoiding that the leakage travels further inside the hole.

According to another preferred embodiment of the invention, the plug is made of a resilient material, such as rubber or plastic, that allows the plug to flex, while at the same time providing a fluid-tight barrier.

According to another preferred embodiment of the invention, the plug is manufactured by injection molding using a polymer. The polymer can be low density PE or a blend of PE and other polymers. The polymer can also be polytetrafluoroethylene (PTFE). The usage of a material like PTFE or PE results in a low friction and thus low resistance during the introduction of the plug inside the hole as well as good sealing capabilities.

According to another preferred embodiment of the invention, the annular portion and the fastening portion are formed integrally as a single piece. An integral connection is a connection of components which permanently joins the individual components together to create a single component which cannot be separated into the original individual components without considerable damage. The integral connection can be achieved for the plug during production in such a way that the mold used for the injection molding comprises both the annular portion and the fastening portion of the plug.

According to another preferred embodiment of the invention, the annular portion and the fastening portion are formed as separate pieces. The annular portion and the fastening portion are then connected after manufacturing by gluing the pieces together or by permanently fixing the pieces otherwise.

According to another preferred embodiment of the invention, the plug is configured to be completely inserted into the hole. This feature has the advantage that the plug is resistant against objects moving along the surface of the flange, as the plug does not stick out of the hole once it has been inserted. For example, once installed, the plug can sit about 10 to 20mm below the surface of the flange, i.e. the plug opening is about 10 to 20mm below the opening of the hole.

According to another preferred embodiment of the invention, the fastening portion has a hexagonal shaped body. This hexagonal shaped body is adapted to receive a complimentary shaped hex key or a bit with a hexagonal shape of the fastening device to fasten the plug in the hole.

As a hex key is a standard key coming in different sizes, the plugs can be of different sizes as well and be adjusted to the size of the hole.

The fastening device can therefore be a hex key. The fastening device can also be a power driven tool with a bit holder for holding the bit and a motor for rotating the bit and transferring the rotation to the plug.

Alternatively, other standard industrial tools for fastening and removal can be used as the fastening device and the shape of the fastening portion can be adjusted according to the fastening device used. For example, the fastening portion can have a single horizontal indentation, i.e. a slot, and a slot screwdriver can be used as the fastening device to fasten or remove the plug. Alternatively, the fastening portion can have two indentations, which are oriented perpendicular to each other, i.e. a cross or a double-slot, and a cross screwdriver can be used as the fastening device to fasten or remove the plug. Other shapes for the socket screwdriver, such as a triangle, square, double-square, triple-square, pentagon, double hex, pentalobe, hexalobular, etc. can be used and the fastening portion is designed accordingly with a corresponding shape for the fastening device to be inserted in the fastening portion.

The fastening device is inserted in the hexagonal shape of the fastening portion of the plug and then turns the plug to fasten the plug in the hole.

Usually, for the removing of the plug, the same fastening device can be used. This fastening device will then turn in the other rotational direction than the one used for fastening the plug for detaching the plug.

According to another preferred embodiment of the invention, a cover covers the plug opening to protect the annular portion and/or the fastening portion of the plug. This is advantageous, as sealing the plug itself prevents dirt and debris from filling up inside the plug, impeding or hindering the removing of the plug at a later stage when the plug is not needed anymore.

The cover can be pressed at the plug opening. This is advantageous for an easy removal of the cover when it is not needed anymore. Alternatively, the cover can be glued to the opening. A glued cover has increased sealing properties and the chance of the cover falling out is reduced.

The cover can comprise a pull tab for removing the cover from the plug opening. The pull tab can be formed as a lip arranged at a surface of the cover. The pull tab can be gripped and pulled to remove the cover from the plug.

The cover can be configured to be punched before the plug is being detached to save time removing the cover. For example, the fastening device punches the cover and is then inserted in the fastening portion of the plug for removing the plug from the hole.

A punch-through cover can be sealed to the plug with an adhesive, such as glue. Alternatively, the punch-through cover can be pressed against the plug so that it is blocked inside. Alternatively, the punch-through cover can be configured to melt and/or expand when heated to securely couple to the plug. Alternatively, the punch-through cover can have a weakened central area configured to break during punching. A superposition of this features for the cover is also possible.

According to another preferred embodiment of the invention, a corrosion inhibiting grease is inserted in the hole before inserting the plug to ease the insertion of the plug and to protect the hole. For this, the hole is first at least partly filled with the grease or a grease layer is applied on the thread or a grease layer is applied at the inner surface of the hole, for example by a brush, and then the plug is inserted. After inserting the plug, any open spaces inside the hole which are not in contact with the plug will be protected by the grease. Additionally, for an annular portion comprising a periodically repeated pattern, the grease can be stored in the valleys. As grease is hydrophobic, it will repel the humidity and catch any dirt leakages, so that the inner part of the hole is protected. Similarly, the grease can be stored in the grooves.

The use of a grease in the holes also simplifies the insertion and removal of the plugs, as the surface of the plug can glide more easily inside the plug. Additionally, it simplifies the fastening of the fastening portion with the second part of the hole for the case where there is a threaded portion in the hole, as the grease helps the engagement of the fastening portion with the threads.

Alternatively, instead of grease an oil or a corrosion inhibiting oil can be used.

Yet another aspect of the present invention relates to a flange of a tower of a wind turbine comprising a hole configured to be inserted by a fastener. A plug is inserted in the hole to protect the hole of the flange against water and dirt. The plug comprises an annular portion for sealing the opening of the hole and a fastening portion protruding from the annular portion. The fastening portion is configured to be inserted by a fastening device for fastening the plug to the hole. The plug has a hollow space inside its body and has a plug opening for allowing the insertion of the fastening device.

Another aspect of the invention relates to a method of inserting and fastening plugs comprising the steps of placing the plug in the hole by hand or by a machine, introducing the fastening device inside the hollow space of the plug through the plug opening and consequently pressing the plug so that the plug shifts in an axial direction of the hole, thereby fastening the plug in the hole.

Another aspect of the invention relates to a method of inserting and fastening plugs in holes with a threaded part comprising the steps of placing the plug in the hole by hand or by a machine, introducing the fastening device inside the hollow space of the plug through the plug opening and consequently pressing the plug so that the plug shifts in an axial direction of the hole, thereby introducing the plug in the hole until the fastening portion of the plug is in line with the threaded part of the hole, and turning the plug with the fastening device so that the fastening portion engages with the internal threads of the threaded part of the hole, fastening the plug to the hole.

In order to facilitate the understanding of the characteristics of the invention and being an integral part of this specification, some drawing sheets are attached on which figures, with an illustrative but not limiting character, the following is represented:
Figure 1 shows a plug according to a first embodiment of the invention comprising a cover covering the plug opening.
Figure 2 shows a plug inserted in a hole.
Figure 3 shows a plug according to a first embodiment of the invention, where the cover is detached from the plug opening
Figure 4 shows a plug according to a second embodiment of the invention.
Figures 5 and 6 show the introduction of the plug in the hole and the fastening of the plug to the hole.
Figure 7 shows the attachment of the cover to the plug opening.
Figure 8 shows a plug with a cover, where the length of the annular portion is about the length of the first part of the hole.
Figure 9 shows a plug with a cover, the cover comprising a pull tab.
Figure 10 shows a plug with a cover and a pull tab, where the plug is completely inserted into the hole and the plug opening is at a distance from the opening of the hole.
Figure 11 shows a plug with a substantially flat surface of the annular portion in contact with the inner surface of the hole.
Figure 12 shows a plug with a local compression region of the annular portion where the width of the plug at this region is wider than in the rest of the annular portion.
Figure 13 shows a plug with a tapered annular portion.
Figures 14 to 18 show a plug in which the surface of the annular portion has a profile with a periodically repeated pattern.
Figures 19 and 20 shows a plug with grooves at the surface of the annular portion.

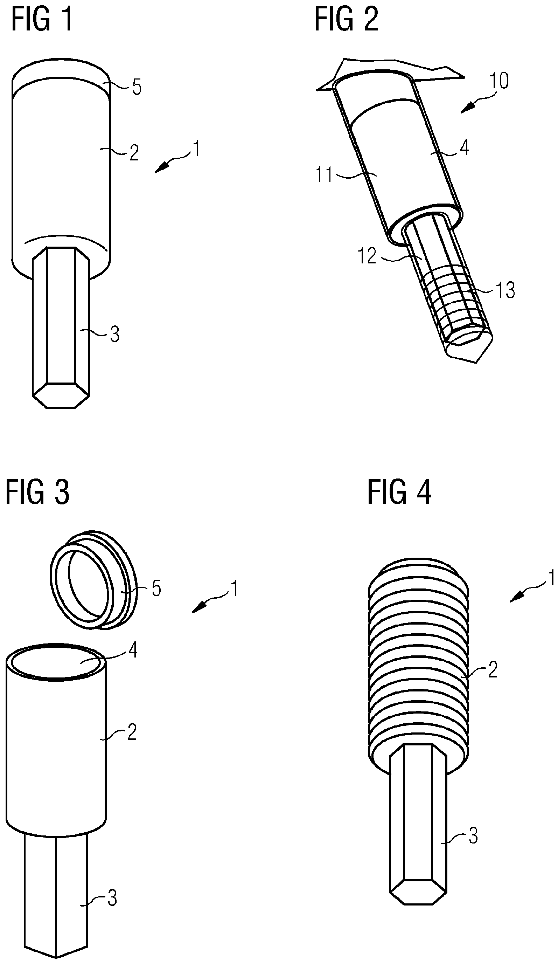

Figure 1 shows a plug (1) according to a first embodiment of the invention comprising a cover (5) covering the plug opening (4). The plug (1) further comprises an annular portion (2) with a substantially flat surface and a fastening portion (3) protruding from the annular portion (2). The fastening portion (3) has a hexagonal shaped body, which is advantageous for using as a fastening device (20) a standard hex key or a power driven tool with a bit with a hexagonal shape. The fastening portion (3) has a smaller width than the annular portion (2), which is advantageous for holes (10) having a first part (11) with a larger diameter than a second part (12). Additionally, the plug (1) comprises a planar annular surface extending in radial direction between the annular portion (2) and the fastening portion (3), which can be configured to abut an inner surface of the hole (10) between the first part (11) and the second part (12) of the hole (10).

Figure 2 shows a plug (1) inserted in a hole (10). The annular portion (2) is in line with the first part (11) of the hole (10) and the fastening portion (3) is in line with the second part (12) of the hole (10). A threaded part (13) with an internal thread covers a part of the second part (12) of the hole (10). In this embodiment, the surface of the fastening portion (3) grips with the threaded part (13) of the hole (10), preventing the plug (1) from detaching and protecting the threads. The length of the fastening portion (3) is about the length of the second part (12) of the hole (10). Additionally, the plug (1) comprises a planar annular surface extending in radial direction between the annular portion (2) and the fastening portion (3), which abuts an inner surface of the hole (10) between the first part (11) and the second part (12) of the hole (10). The contact of both surfaces act as a stopper for the plug (1), limiting the insertion of the plug (1) in the hole (10).

Figure 3 shows the plug (1) of Figure 1, where the cover (5) is detached from the plug opening (4). The cover (5) can be attached or detached from the plug (1) by pressing it against the plug opening (4). The cover (5) is a cylindrical disk with a skirt with a constant width protruding from the outer diameter of the cover (5) in the axial direction. The outer diameter of the cover (5) is about the size of the outer width of the plug (1) at the plug opening (4). The cover (5) is coupled to the plug (1) by inserting the skirt in the plug opening (4).

Figure 4 shows a plug (1) according to a second embodiment of the invention. The surface of the annular portion (2) has a profile with a periodically repeated pattern (7). In this case, the repeated pattern are U-shaped projections. The fastening portion (3) has a hexagonal shaped body.

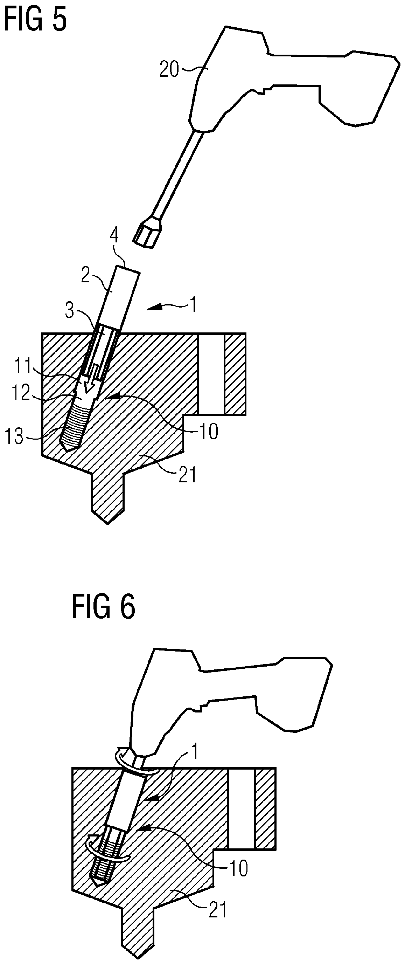

Figures 5 and 6 show the introduction of the plug (1) in the hole (10) and the fastening of the plug (1) to the hole (10). The hole (10) is a hole (10) of a flange (21), wherein the flange (21) is a part of a coupling assembly used to couple tower sections of a wind turbine tower together.

The hole (10) is a blind hole with a first part (11) and a second part (12), wherein the first part (11) has a larger diameter than a second part (12) and a threaded part (13) covers partially the second part (12) of the hole (10).

The plug (1) is placed and centered in the first part (11) of the hole (10) by hand or by a machine. Then, the fastening device (20) is introduced inside the hollow space of the plug (1) through the plug opening (4). Here, the fastening device (20) is a power driven tool with a bit holder holding a bit with a hexagonal shape. The bit is introduced inside the hexagonal shaped body of the fastening portion (3) of the plug (1), resulting in a shape fit. Then, the fastening device (20) presses against the bottom part of the plug (1), i.e. the part of the plug (1) the farthest away from the plug opening (4) in order to shift the plug (1) in an axial direction of the hole (10) until the planar annular surface extending in radial direction between the annular portion (2) and the fastening portion (3) of the plug (1) abuts an inner surface of the hole (10) between the first part (11) and the second part (12) of the hole (10). Then, as the plug (1) is correctly centered and the fastening portion (3) is in line with the threaded part (13) of the hole (10), the fastening device (20) turns the plug (1). Hence, the fastening portion (3) of the plug (1) engages with the threaded part (13) of the hole (10), thereby fastening the plug (1) to the hole (10) .

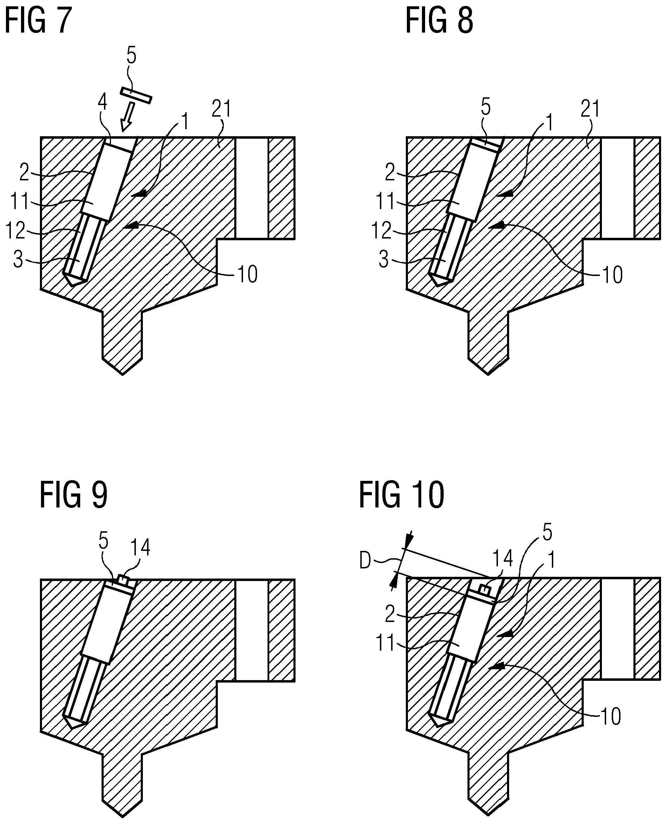

Figure 7 shows the attachment of the cover (5) to the plug opening (4). Once the plug (1) is correctly inserted and fastened to the hole (10) and the fastening device (20) removed, the cover (5) is then attached to the plug opening (4) by pressing the cover (5) against the plug opening (4) or by gluing the cover (5) to the plug opening (4).

Figure 8 shows a plug (1) with a cover (5), where the length of the annular portion (2) is about the length of the first part (11) of the hole (10). In this case, both the cover (5) and the plug (1) are completely inserted into the hole (10).

Figure 9 shows a plug (1) with a cover (5), the cover (5) comprising a pull tab (14). The pull tab (14) is arranged at a surface of the cover (5) in such a way that it can be gripped and pulled to remove the cover (5) from the plug (1).

Figure 10 shows a plug (1) with a cover (5) comprising a pull tab (14)., where the plug (1), the cover (5) and the pull tab (14) are completely inserted into the hole (10) and the plug opening (4) is at a distance (D) from the opening of the hole (10). This option ensures that the plug (1) and the cover (5) do not stick out of the hole (10), avoiding the plug (1) and the cover (5) from being hit by object moving along the surface of the flange (21).

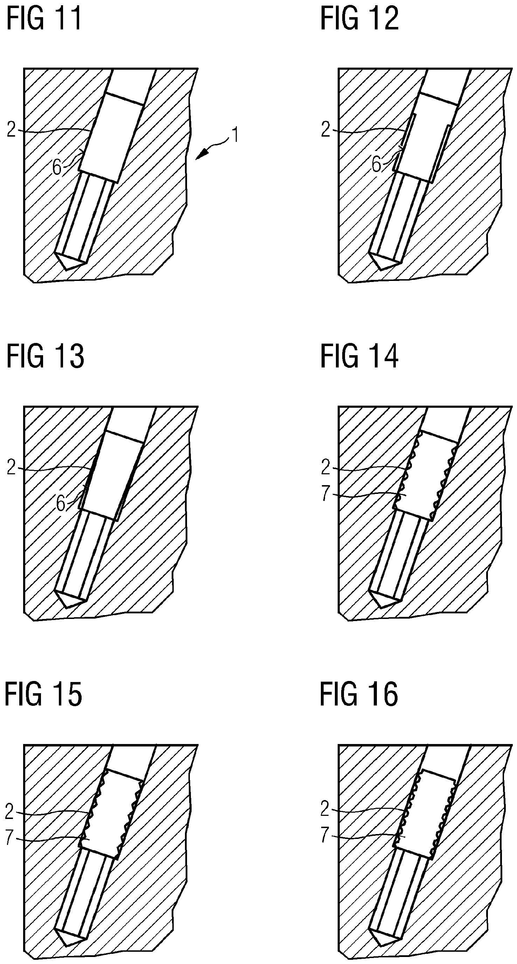

Figure 11 shows a plug (1) with a substantially flat surface of the annular portion (2) in contact with the inner surface of the hole (10). The complete lateral surface of the annular portion (2) of the plug (1) is in contact with the inner surface of the first part (11) of the hole (10).

Figure 12 shows a plug (1) with a local compression region of the annular portion (2), where the width of the plug (1) at this region is wider than in the rest of the annular portion (2). This embodiment makes it easier to remove the plug (1) from the hole (10), as only the resistance of the interference fit of the local compression region of the annular portion (2) has to be overcome to remove the plug (1) from the hole (10).

Figure 13 shows a plug (1) with a tapered annular portion (2), wherein the width of the annular portion (2) decreases gradually from the plug opening (4) to the end of the annular portion (2) at the transition between the annular portion (2) and the fastening portion (3).

Figures 14 to 18 show a plug (1) in which the surface of the annular portion (2) has a profile with a periodically repeated pattern (7).

Figure 14 presents an annular portion (2) exhibiting a sinusoidal pattern. The peaks of this pattern are in contact with the inner surface of the first portion (11) of the hole (10) and the valleys of the pattern can serve to store corrosion inhibiting grease or to catch any water or dirt passing through the seal.

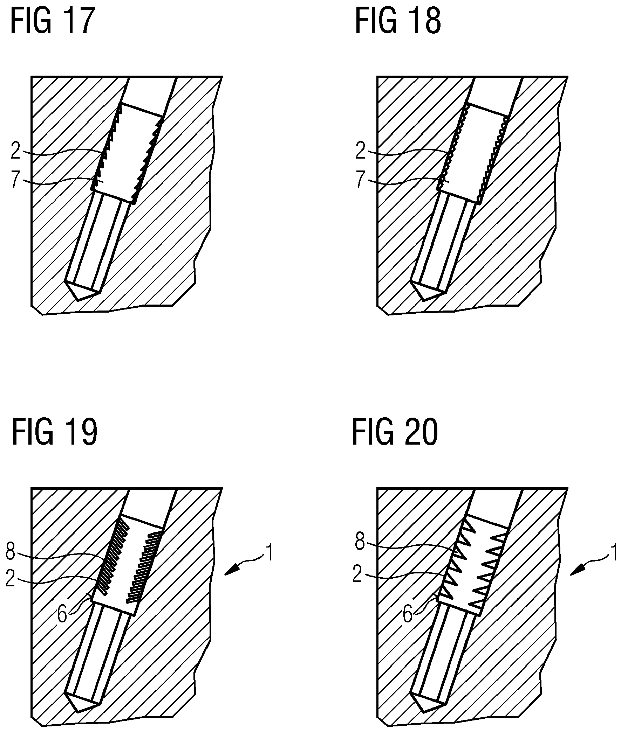

Figure 15 presents an annular portion (2) exhibiting a repetition of isosceles triangles. Figure 16 presents an annular portion (2) exhibiting a repetition of triangles with a flat valley. Figure 17 presents an annular portion (2) exhibiting a repetition of triangles with a curved valley. Hence, Figure 17 shows an embodiment with a superposition of a triangular and a sinusoidal pattern. Figure 18 presents an annular portion (2) exhibiting a repetition of right-angled triangles. The tip of the triangles is in contact with the inner surface of the first portion (11) of the hole (10) and the valleys of the pattern can serve to store corrosion inhibiting grease or to catch any water or dirt passing through the seal.

Figures 19 and 20 show a plug (1) with grooves (8) at the surface of the annular portion (2). The grooves (8) can be cuts at the surface of the annular portion (2), as shown in Figure 19, or regions removed from the surface of the annular portion (2), as shown in Figure 20. A combination of both types is also possible, as well as a combination of the grooves (8) with a periodically repeated pattern (7) of the shape of the surface of the annular portion (2).

### Reference numbers

- 1: Plug
- 2: Annular portion
- 3: Fastening portion
- 4: Plug opening
- 5: Cover
- 6: Flat surface
- 7: Periodically repeated pattern
- 8: Groove
- 10: Hole
- 11: First part
- 12: Second part
- 13: Threaded part
- 14: Pull tab
- 20: Fastening device
- 21: Flange
- D: Distance between plug opening and hole opening

## Claims

1. A plug (1) configured to protect a hole (10) of a flange (21), said plug (1) comprising an annular portion (2) for sealing the opening of the hole (10) and a fastening portion (3) protruding from the annular portion (2), **characterized in that** the fastening portion (3) is configured to be inserted by a fastening device (20) for fastening the plug (1) to the hole (10), wherein the plug (1) has a hollow space inside its body and has a plug opening (4) for allowing the insertion of the fastening device (20).

2. The plug (1) according to claim 1, **characterized in that** the hole (10) comprises a first part (11) and a second part (12) .

3. The plug (1) according to claim 2, **characterized in that** a threaded part (13) covers at least partially the second part (12) of the hole (10).

4. The plug (1) according to claim 3, **characterized in that** the surface of the fastening portion (3) grips with the threaded part (13) of the hole (10), preventing the plug (1) from detaching and protecting the threads.

5. The plug (1) according to claim 2 to 4, **characterized in that** the width of at least a part of the annular portion (2) is larger than the diameter of the first part (11) of the hole (10) before inserting the plug (1) in the hole (10), wherein the insertion of the plug (2) and the sealing of the hole (10) is achieved through compression of the annular portion (2).

6. The plug (1) according to any of the preceding claims, **characterized in that** the surface of the annular portion (2) has a profile with a periodically repeated pattern (7).

7. The plug (1) according to any of the preceding claims, **characterized in that** the surface of the annular portion (2) has grooves (8) configured to collect a leakage.

8. The plug (1) according to any of the preceding claims, **characterized in that** said plug (1) is manufactured by injection molding using a polymer.

9. The plug (1) according to any of the preceding claims, **characterized in that** the annular portion (2) and the fastening portion (3) are formed integrally as a single piece.

10. The plug (1) according to any of the preceding claims, **characterized in that** the plug (1) is configured to be completely inserted into the hole (10).

11. The plug (1) according to any of the preceding claims, **characterized in that** the fastening portion (3) has a smaller width than the annular portion (2).

12. The plug (1) according to any of the preceding claims, **characterized in that** the fastening portion (3) has a hexagonal shaped body.

13. The plug (1) according to any of the preceding claims, **characterized in that** a cover (5) covers the plug opening (4) to protect the annular portion (2) and/or the fastening portion (3) of the plug (1).

14. The plug (1) according to any of the preceding claims, **characterized in that** a corrosion inhibiting grease is inserted in the hole (10) before inserting the plug (1) to ease the insertion of the plug (1) and to protect the hole (10).

15. A flange (21) of a tower of a wind turbine comprising a hole (10) configured to be inserted by a fastener, said flange (21) comprising a plug (1) according to any of the preceding claims.
